# EUROPÄISCHE PATENTSCHRIFT

(11) **EP 1 699 675 B1**
(45) Veröffentlichungstag und Bekanntmachung des Hinweises auf die Patenterteilung: **01.07.2009**
(21) Anmeldenummer: 04804916.7
(22) Anmeldetag: 17.12.2004
(51) Int. Cl.: B62D 5/00, F16D 41/10

(54) **GETRIEBEVERRIEGELUNG UND ÜBERLAGERUNGSLENKUNG MIT EINER GETRIEBEVERRIEGELUNG**
TRANSMISSION LOCK AND SUPERPOSITION STEERING SYSTEM COMPRISING A TRANSMISSION LOCK
SYSTEME DE VERROUILLAGE DE TRANSMISSION ET SYSTEME DE DIRECTION A SUPERPOSITION COMPRENANT UN SYSTEME DE VERROUILLAGE DE TRANSMISSION

(30) Priorität: 24.12.2003 DE 10361232
(43) Veröffentlichungstag der Anmeldung: 13.09.2006
(73) Patentinhaber: Continental Teves AG & Co. oHG, 60488 Frankfurt am Main (DE); Schaeffler KG, 91074 Herzogenaurach (DE)
(72) Erfinder: BAYER, Ronald, 63165 Mühlheim/Main (DE); HOFFMANN, Cristiano, 65936 Frankfurt (DE); JUNGBECKER, Johann, 55576 Badenheim (DE); NELL, Joachim, 63452 Hanau (DE); LINKENBACH, Steffen, 65760 Eschborn (DE); MUTH, Norman, 35066 Frankenberg (DE); ZERNICKEL, Alexander, 91074 Herzogenaurach (DE); HOCHMUTH, Harald, 91469 Hagenbüchach (DE); WILLARED, Stefan, 91352 Pautzfeld (DE)
(86) Internationale Anmeldenummer: PCT/EP2004/053576
(87) Internationale Veröffentlichungsnummer: WO 2005/063549

(56) Entgegenhaltungen:
- EP-A- 1 371 869
- DE-A1- 4 417 510
- GB-A- 437 891
- US-A- 4 901 831
- PATENT ABSTRACTS OF JAPAN Bd. 2000, Nr. 23, 10. Februar 2001 (2001-02-10) -& JP 2001 153158 A (NTN CORP), 8. Juni 2001 (2001-06-08)
- PATENT ABSTRACTS OF JAPAN Bd. 1999, Nr. 08, 30. Juni 1999 (1999-06-30) -& JP 11 072128 A (AICHI CORP), 16. März 1999 (1999-03-16)

## Beschreibung

Die Erfindung betrifft eine Getriebeverriegelung für eine Überlagerungslenkung eines Kraftfahrzeugs, zum Verriegeln eines dem Getriebe zugeordneten oder mit dem Getriebe zusammenwirkenden drehbaren Getriebeteils gegenüber seiner Drehbewegung.

Die Erfindung betrifft auch eine Überlagerungslenkung mit einem Überlagerungsgetriebe mit einem ersten Eingang für eine Fahrerbetätigung über eine Lenkhandhabe, einem zweiten Eingang für einen Überlagerungsaktuator und einem Ausgang zum Lenkgetriebe der Lenkung, mittels welchem Überlagerungsgetriebe (in Abhängigkeit der Fahrsituation) über beide Eingänge ein Ausgangswinkel und somit ein Radwinkel der lenkbaren Fahrzeugräder eingestellt wird, und mit einer Verriegelungseinheit, mittels der bei einem Systemausfall der zweite Eingang für den Überlagerungsaktuator verriegelt wird und die Lenkfähigkeit des Fahrzeugs durch den Fahrer erhalten bleibt.

Bei einer Überlagerungslenkung kann dem Fahrerlenkwinkel ein Zusatzlenkwinkel überlagert werden. Dadurch wird eine freie Zuordnung von Lenkradstellung und Radeinschlag ermöglicht. Diese freie Zuordnung erfolgt beispielsweise über einen elektromechanischen Steller, welcher aus einem Überlagerungsgetriebe, einem Motor und geeigneter Sensorik besteht.

Wird im Falle eines Fehlers das System für die Überlagerungsfunktion abgeschaltet, dann muss das Überlagerungsgetriebe so verriegelt werden, dass eine normale Lenkfunktion weiterhin gegeben bleibt. Für diesen Systemzustand ist eine zusätzliche Verriegelung notwendig.

Aus der EP 1 371 869 A1 ist eine Getriebeverriegelung gemäß dem Oberbegriff des Anspruchs 1 bekannt. Diese weist jedoch den Nachteil auf, dass die Verriegelung durch die Reibwirkung von Reibflächen erfolgt.

Es ist die Aufgabe der Erfindung, eine Verriegelung zu schaffen, die für eine Überlagerungslenkung geeignet und welche sicherer gestaltet ist.

Die Aufgabe wird durch die Merkmale der unabhängigen Patentansprüche gelöst. Spezielle Ausgestaltungen der Erfindung sind in den davon abhängigen Unteransprüchen angegeben.

Mittels eines Klemmkörpers, insbesondere einer Klemmrolle, ist über eine Kontur einer inneren Mantelfläche (Innenkontur) eines Außenrings und eine Kontur einer äußeren Mantelfläche (Außenkontur) eines Innenrings der Innenring mit dem Außenring gegen eine elastische Kraft formschlüssig verriegelbar, und die Klemmrolle wird in einem Aktivierungskäfig gehalten, der über ein betätigbares Riegelglied verriegelbar ist.

Es ist erfindungsgemäß vorgesehen, dass der Aktivierungskäfig mit einer Aktivierungsrastscheibe wirkverbunden ist, in dessen Aufnahme ein der Aktivierungsscheibe zugeordneter Eingriffszahn in einer Verriegelungsstellung eingreift und in einer unverriegelten Stellung aus der Aufnahme zurückgezogen ist.

Es ist nach der Erfindung vorgesehen, dass der Klemmkörper in der verriegelten Stellung über eine Doppelrampe des Außenrings gegen eine elastische Kraft, vorzugsweise gegen eine elastische Kraft eines Federrings, in eine Kalotte des Innenrings gedrückt wird und der Klemmkörper in der unverriegelten Stellung von einer elastischen Kraft, vorzugsweise der elastischen Kraft eins Federrings, in ein Dach der Doppelrampe des Außenrings gedrückt wird und der Klemmkörper in der unverriegelten Stellung von den Kalotten des Innenrings beabstandet ist.

Erfindungsgemäß ist es vorgesehen, dass die Aktivierungsscheibe bzw. der der Aktivierungsscheibe zugeordnete Eingriffszahn im wesentlichen parallel zum Verlauf der Längsachse des Aktivierungskäfigs drehbar gelagert ist.

Es ist nach der Erfindung vorgesehen, dass die Aktivierungsscheibe zumindest einen schwenkbar angelenkten Schwenkarm aufweist, welcher Schwenkarm zumindest den Eingriffszahn aufweist, der zur Herbeiführung einer Verriegelung des Getriebes in die Aufnahme zumindest teilweise eingreift.

Es ist erfindungsgemäß vorgesehen, dass die dem drehbaren Getriebeteil zugeordnete Aufnahme durch eine mit dem drehbaren Getriebeteil zusammenwirkende Axialverzahnung gebildet wird.

Nach Erfindung der Erfindung ist es vorgesehen, dass die betätigbare Aktivierungsscheibe über einen Elektromagneten betätigbar ist und das Getriebe im stromlosen Zustand des Elektromagneten verriegelt.

Es ist nach der Erfindung vorgesehen, dass der Aktivierungskäfig über ein elastische Mittel, vorzugsweise Druckfedern, zwischen dem Innenring und dem Außenring zentriert wird.

Es ist erfindungsgemäß vorgesehen, dass mittels des den Aktivierungskäfig zentrierenden elastischen Mittels das Getriebe momentenabhängig verriegelt wird, in dem bei einem Moment von dem Getriebe, welches größer ist als ein Vorspannmoment des elastischen Mittels, insbesondere abhängig von der Drehrichtung, die Klemmkörper über die Kontur der inneren Mantelfläche des Außenrings und die Kontur der äußeren Mantelfläche des Innenrings den Innenring mit dem Außenring gegen die elastische Kraft formschlüssig verriegeln.

Nach Erfindung der Erfindung ist es vorgesehen, dass als Mittel zur Erzeugung der elastischen Kraft ein Federring verwendet wird, der zumindest eine Abwinkelung ähnlich einer Drehfeder aufweist, die in einer Nut des Aktivierungskäfigs zur Anlage kommt, zwecks Positionierung und Vermeidung einer radialen Bewegung des Federrings in dem Aktivierungskäfig.

Die Aufgabe wird auch durch eine Überlagerungslenkung mit einem Überlagerungsgetriebe mit einem ersten Eingang für eine Fahrerbetätigung über eine Lenkhandhabe, einem zweiten Eingang für einen Überlagerungsaktuator und einem Ausgang zum Lenkgetriebe der Lenkung, mittels welchem Überlagerungsgetriebe (in Abhängigkeit der Fahrsituation) über beide Eingänge ein Ausgangswinkel und somit ein Radwinkel der lenkbaren Fahrzeugräder eingestellt wird, und mit einer Verriegelungseinheit, mittels der bei einem Systemausfall der zweite Eingang für den Überlagerungsaktuator verriegelt wird und die Lenkfähigkeit des Fahrzeugs durch den Fahrer erhalten bleibt, gelöst, die dadurch gekennzeichnet ist, dass als Verriegelungseinheit eine Getriebeverriegelung nach der Erfindung vorgesehen ist.

Die Erfindung wird nun anhand eines Ausführungsbeispiels und durch Abbildungen (Fig. 1a bis Fig. 2c) beispielhaft näher erläutert.
Fig. 1a zeigt einen Querschnitt durch eine Getriebeverriegelung einer Überlagerungslenkung nach der Erfindung im inaktiven, unverriegelten Zustand.
Fig. 1b zeigt die Getriebeverriegelung in einer ersten perspektivischen Darstellung im inaktiven, unverriegelten Zustand.
Fig. 1c zeigt die Getriebeverriegelung in einer zweiten perspektivischen Darstellung im inaktiven, unverriegelten Zustand.
Fig. 2a zeigt einen Querschnitt durch eine Getriebeverriegelung einer Überlagerungslenkung nach der Erfindung im aktiven, verriegelten Zustand.
Fig. 2b zeigt die Getriebeverriegelung in einer ersten perspektivischen Darstellung im aktiven, verriegelten Zustand.
Fig. 2c zeigt die Getriebeverriegelung in einer zweiten perspektivischen Darstellung im aktiven, verriegelten Zustand.

Mittels der in den Abbildungen gezeigten Getriebeverriegelung ist ein Überlagerungsgetriebe einer Überlagerungslenkung eines Kraftfahrzeugs verriegelbar.

Das Überlagerungsgetriebe ist eine Getriebeeinheit mit zwei Eingängen: einen ersten Eingang für eine Fahrerbetätigung über eine Lenkhandhabe, insbesondere ein Lenkhandrad, und einen zweiten Eingang für einen Überlagerungsaktuator, insbesondere einen Elektromotor (E-Motor). Die Getriebeeinheit weist einen Ausgang zum Lenkgetriebe der Lenkung auf.

Bei eingeschaltetem System wird, in Abhängigkeit der Fahrsituation, über beide Eingänge ein Ausgangswinkel und somit ein Radwinkel der lenkbaren Fahrzeugräder eingestellt. Bei einem Systemausfall wird der zweite Eingang (E-Motor) verriegelt, um die Lenkfähigkeit des Fahrzeugs durch den Fahrer zu erhalten. Diese Verriegelung des Getriebes erfolgt vorzugsweise über eine Aktivierungsscheibe die federvorgespannt in eine Aktivierungsrastscheibe des Verriegelungsmechanismus eingreift. Als Folge der Verriegelung wird ein Aktivierungskäfig des Überlagerungsgetriebes blockiert. Der Lenkdurchgriff, d.h. eine (direkte) Lenkbetätigungsmöglichkeit durch den Fahrer, bleibt so erhalten.

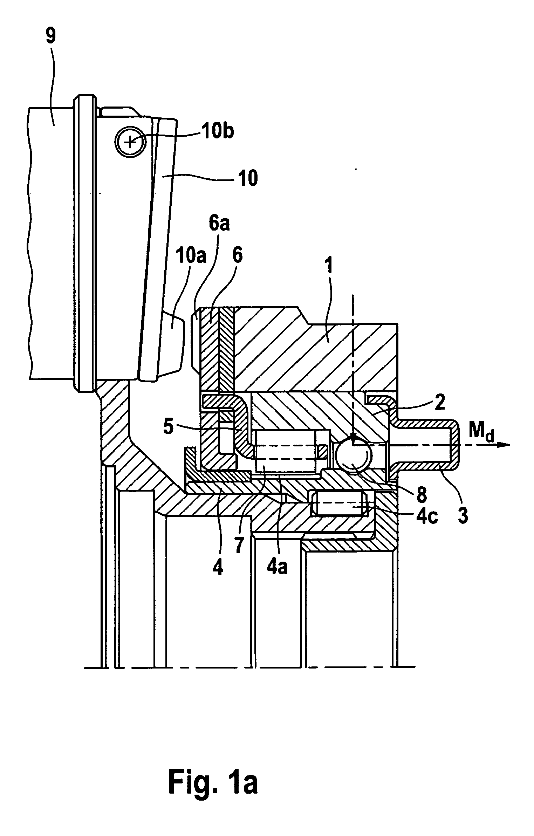

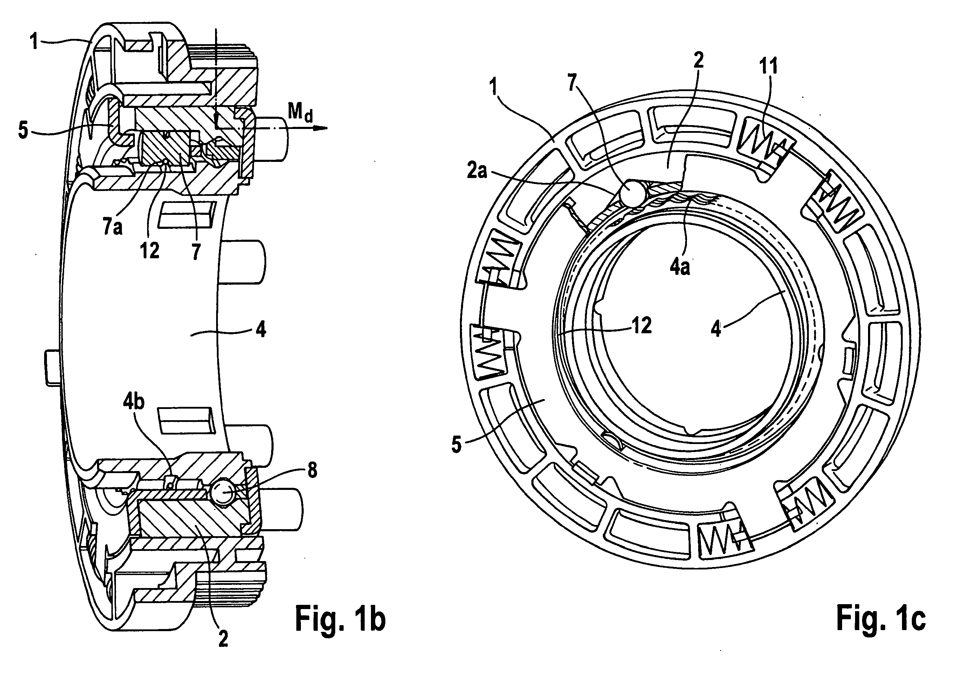

Bei der in Fig. 1a bis Fig. 1c dargestellten Getriebeverriegelung ist das Überlagerungsgetriebe nicht verriegelt, d.h. die Getriebeverriegelung ist "inaktiv".

Ein Innenring (4) ist über einen Formschluss (4c) mit einem Gehäuse verbunden. Klemmkörper (7) werden von einem Federring (12) in das Dach einer Doppelrampe (2a) eines Außenrings (2) gedrückt und somit ein Kontakt der Klemmkörper (7) mit Kalotten (4a) eines Innenrings (4) vermieden. Die Einheit ist in beide Drehrichtungen frei drehbar.

Ein Aktivierungskäfig (5) wird über Druckfedern (11), welche gleichzeitig einer drehmomentabhängigen Zuschaltung, d.h. einer Verriegelung der Einheit dienen, zentriert. Die Druckfedern (11) stützen sich am Aktivierungskäfig (5) und in Federaufnahmetaschen (1a) eines Kunststoffpulleys (1) (Kunststoffriemens) ab, der mit einem Überlagerungsmotor wirkverbunden ist.

Der Kunststoffpulley (1) selbst ist mit dem Außenring (2) formschlüssig zur Drehmomentübertragung verbunden. Die Vorspannung der Druckfedern (11) ist so gewählt, dass eine Drehmomentübertragungen in einem Nominalbereich vom Kunststoffpulley über den Außenring (2) in den Abtrieb, d.h. einen Mitnehmer (3) zu einem Überlagerungsgetriebe erfolgt. Dies entspricht dem Antrieb mittels eines Sekundärgetriebes, z.B. über einen Zahnriemen, und einem E-Motor als Überlagerungsmotor, also dem Eingriff in das Überlagerungsgetriebe, vorzugsweise ein Planetengetriebe.

In diesem (aktiven) Betriebszustand ist ein Elektromagnet (9) bestromt und zieht gegen Betätigungsfedern (10c) einen Eingriffszahn (10a) einer Aktivierungsscheibe (10) außer Eingriff mit einer Aktivierungsrastscheibe (6) der Verriegelungseinheit.

Die Aufnahme der Schräg- und Radialkräfte sowie die Zentrierung der Einheit erfolgt hier über ein Vierpunktkugellager (8). Dieses ist zweckmäßigerweise unter der Riemenspur angeordnet.

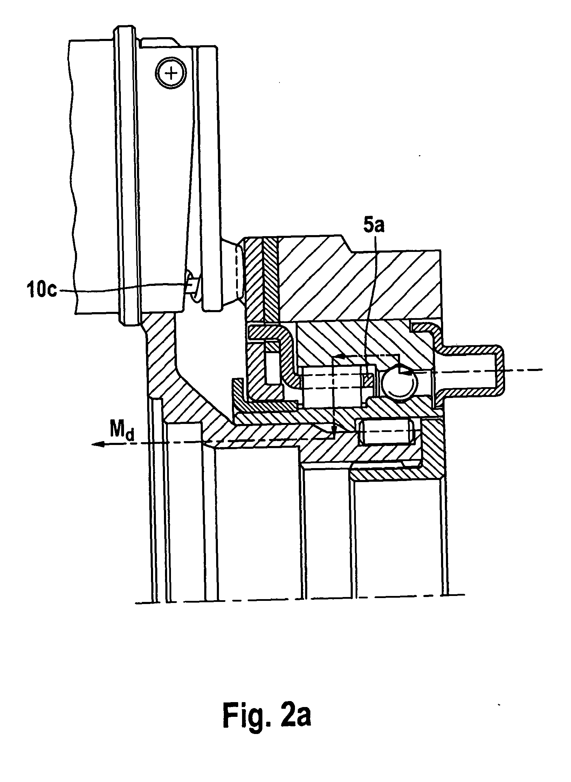

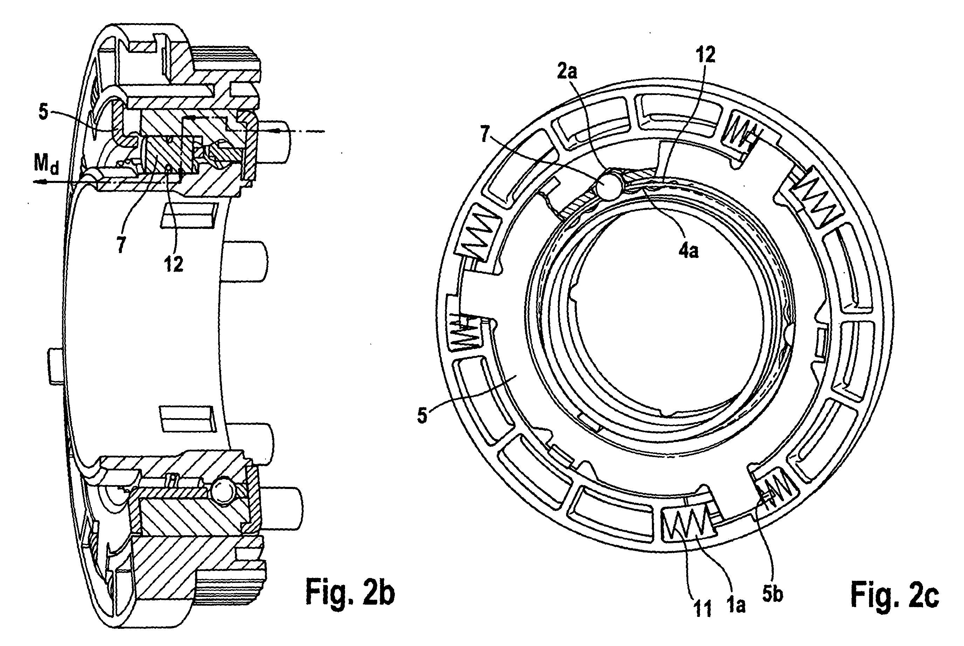

In Fig. 2a bis Fig. 2c ist die Situation bei einem Systemfehler, wie einem Stromausfall, dargestellt. Dann ist die Getriebeverriegelung "aktiv", d. h. das Überlagerungsgetriebe ist verriegelt.

Der E-Magnet (9) ist hier unbestromt und lässt die Aktivierungsscheibe (10) frei. Unterstützt durch Betätigungsfedern (10c) fällt der Eingriffszahn (10a) in die Aktivierungsrastscheibe (6) der Verriegelungseinheit und hält dadurch den Aktivierungskäfig (5) fest.

Wird ein Moment, welches größer ist als das Vorspannmoment der Druckfedern (11), über die Mitnehmer (3) von der (Planeten)-Getriebeseite her eingeleitet, so werden, abhängig von der Drehrichtung, die Klemmkörper (7) über die Rampe (2a) des Außenrings (2) gegen den Federring (12) in die Kalotten (4a) des Innenrings (4) gedrückt. Dabei verschwindet der Federring (12) in einer Federnut (4b) des Innenrings (4). Das System ist somit formschlüssig verriegelt.

Damit ein Wandern des Federrings (12) vermieden wird, weist der Federring (12) ähnlich einer Drehfeder zwei Abwinkelungen auf. Diese sitzen in einer Nut des Aktivierungskäfigs (5) und positioniert den Federring (12) eindeutig. Die Länge der Schenkel ist so bemessen, dass diese während der Betätigung und der dabei auftretenden Durchmesseränderung nicht aus dem Aktivierungskäfig (5) wandern.

Wird das System wieder bestromt, geht die Einheit aufgrund der Druckfedern (11) wie vorher beschrieben in die Grundfunktion zurück.

### Bezugszeichenliste

- 1: Kunststoffpulley mit Riemenspur
- 1a: Federaufnahmetaschen
- 2: Außenring
- 2a: Doppelrampe mit Steuerfunktion
- 3: Mitnehmer/Schnittstelle zum Planetengetriebe
- 3a: Spaltdichtung
- 4: Innenring
- 4a: Kalotten
- 4b: Federnut
- 4c: Formschluss zum Gehäusesitz
- 5: Aktivierungskäfig
- 5a: Käfigtasche
- 5b: Federpositionierungslasche
- 6: Aktivierungs-Rastscheibe
- 6a: Axialverzahnung
- 7: Klemmkörper
- 7a: Federhaltenut
- 8: Vierpunktkugellager
- 9: E-Magnet
- 10: Aktivierungsscheibe
- 10a: Eingriffszahn
- 10b: Drehpunkt
- 10c: Betätigungsfeder
- 11: Druckfeder zur momentenabhängigen Aktivierung
- 12: Federring

## Patentansprüche

1. Getriebeverriegelung für eine Überlagerungslenkung eines Kraftfahrzeugs, zum Verriegeln eines dem Getriebe zugeordneten oder mit dem Getriebe zusammenwirkenden drehbaren Getriebeteils gegenüber seiner Drehbewegung, wobei mittels eines Klemmkörpers (7) über eine Kontur einer inneren Mantelfläche eines Außenrings (2) und eine Kontur einer äußeren Mantelfläche eines Innenrings (4) der Innenring (4) mit dem Außenring (2) gegen eine elastische Kraft formschlüssig verriegelbar ist, und der Klemmkörper (7) in einem Aktivierungskäfig (5) gehalten wird, der über eine betätigbare Aktivierungsscheibe (10) verriegelbar ist, **dadurch gekennzeichnet,**
**dass** der Aktivierungskäfig (5) mit einer Aktivierungsrastscheibe (6) wirkverbunden ist, in dessen Aufnahme ein der Aktivierungsscheibe (10) zugeordneter Eingriffszahn (10a) in einer Verriegelungsstellung eingreift und in einer unverriegelten Stellung aus der Aufnahme zurückgezogen ist.

2. Getriebeverriegelung nach Anspruch 1,
**dadurch gekennzeichnet, dass** der Klemmkörper (7) in der verriegelten Stellung über eine Doppelrampe (2a) des Außenrings (2) gegen eine elastische Kraft in eine Kalotte (4a) eines Innenrings (4) gedrückt wird und der Klemmkörper (7) in der unverriegelten Stellung von einer elastischen Kraft in ein Dach der Doppelrampe (2a) des Außenrings (2) gedrückt wird und der Klemmkörper (7) in der unverriegelten Stellung von den Kalotten (4a) des Innenrings (4) beabstandet ist.

3. Getriebeverriegelung nach Anspruch 1 oder 2,
**dadurch gekennzeichnet, dass** die Aktivierungsscheibe (10) bzw. der der Aktivierungsscheibe (10) zugeordnete Eingriffszahn (10a) im wesentlichen parallel zum Verlauf der Längsachse des Aktivierungskäfigs (5) drehbar gelagert ist.

4. Getriebeverriegelung nach einem der Ansprüche 1 bis 3,
**dadurch gekennzeichnet, dass** die Aktivierungsscheibe (10) zumindest einen schwenkbar angelenkten Schwenkarm aufweist, welcher Schwenkarm zumindest den Eingriffszahn (10a) aufweist, der zur Herbeiführung einer Verriegelung des Getriebes in die Aufnahme zumindest teilweise eingreift.

5. Getriebeverriegelung nach Anspruch 4,
**dadurch gekennzeichnet, dass** die dem drehbaren Getriebeteil zugeordnete Aufnahme durch eine mit dem drehbaren Getriebeteil zusammenwirkende Axialverzahnung (6a) gebildet wird.

6. Getriebeverriegelung nach einem der Ansprüche 1 bis 5,
**dadurch gekennzeichnet, dass** die betätigbare Aktivierungsscheibe (10) über einen Elektromagneten (9) betätigbar ist und das Getriebe im stromlosen Zustand des Elektromagneten (9) verriegelt.

7. Getriebeverriegelung nach einem der Ansprüche 1 bis 6,
**dadurch gekennzeichnet, dass** der Aktivierungskäfig (5) über ein elastische Mittel zwischen dem Innenring (4) und dem Außenring (2) zentriert wird.

8. Getriebeverriegelung nach Anspruch 7,
**dadurch gekennzeichnet, dass** mittels des den Aktivierungskäfig (5) zentrierenden elastischen Mittels das Getriebe momentenabhängig verriegelt wird, in dem bei einem Moment von dem Getriebe, welches größer ist als ein Vorspannmoment des elastischen Mittels, die Klemmkörper (7) über die Kontur der inneren Mantelfläche des Außenrings (2) und die Kontur der äußeren Mantelfläche des Innenrings (4) den Innenring (4) mit dem Außenring (2) gegen die elastische Kraft formschlüssig verriegeln.

9. Getriebeverriegelung nach einem der Ansprüche 1 bis 8,
**dadurch gekennzeichnet, dass** als Mittel zur Erzeugung der elastischen Kraft ein Federring (12) verwendet wird, der zumindest eine Abwinkelung ähnlich einer Drehfeder aufweist, die in einer Nut des Aktivierungskäfigs (5) zur Anlage kommt, zwecks Positionierung und Vermeidung einer radialen Bewegung des Federrings (12) in dem Aktivierungskäfig (5).

10. Überlagerungslenkung mit einem Überlagerungsgetriebe mit einem ersten Eingang für eine Fahrerbetätigung über eine Lenkhandhabe, einem zweiten Eingang für einen Überlagerungsaktuator und einem Ausgang zum Lenkgetriebe der Lenkung, mittels welchem Überlagerungsgetriebe über beide Eingänge ein Ausgangswinkel und somit ein Radwinkel der lenkbaren Fahrzeugräder eingestellt wird, und mit einer Verriegelungseinheit, mittels der bei einem Systemausfall der zweite Eingang für den Überlagerungsaktuator verriegelt wird und die Lenkfähigkeit des Fahrzeugs durch den Fahrer erhalten bleibt, **dadurch gekennzeichnet, dass** als Verriegelungseinheit eine Getriebeverriegelung nach einem der Ansprüche 1 bis 9 vorgesehen ist.

## Claims

1. Transmission lock for an override steering of a motor vehicle, for locking in terms of its rotational movement a rotatable transmission part assigned to the transmission and cooperating with the transmission, where by means of a clamping body (7), via a contour of an inner surface area of an outer ring (2) and a contour of an outer surface area of an inner ring (4), the inner ring (4) can be locked positively with the outer ring (2) against an elastic force, and the clamping body (7) is held in an activation cage (5) which can be locked via an actuable activation disc (10), **characterized in that** the activation cage (5) is operatively connected to an activation latching disc (6), in the receptacle of which an engagement tooth (10a) assigned to the activation disc (10) engages in a locking position and is retracted out of the receptacle in a non-locked position.

2. Transmission lock according to Claim 1, **characterized in that** the clamping body (7), in the locked position, is pressed via a double ramp (2a) of the outer ring (2) counter to an elastic force into a spherical cup (4a) of an inner ring (4), and the clamping body (7), in the non-locked position, is pressed by an elastic force into a roof of the double ramp (2a) of the outer ring (2), and the clamping body (7), in the non-locked position, is spaced apart from the spherical cups (4a) of the inner ring (4).

3. Transmission lock according to Claim 1 or 2, **characterized in that** the activation disc (10) or the engagement tooth (10a) assigned to the activation disc (10) is mounted rotatably essentially parallel to the run of the longitudinal axis of the activation cage (5).

4. Transmission lock according to either one of Claims 1 and 2, **characterized in that** the activation disc (10) has at least one pivotably articulated pivoting arm, which pivoting arm has at least the engagement tooth (10a) which engages at least partially into the receptacle in order to bring about a locking of the transmission.

5. Transmission lock according to Claim 4, **characterized in that** the receptacle assigned to the rotatable transmission part is formed by an axial toothing (6a) cooperating with the rotatable transmission part.

6. Transmission lock according to one of Claims 1 to 5, **characterized in that** the actuable activation disc (10) can be actuated via an electromagnetic (9), and the transmission is locked in the currentless state of the electromagnet (9).

7. Transmission lock according to one of Claims 1 to 6, **characterized in that** the activation cage (5) is centred between the inner ring (4) and the outer ring (2) via an elastic means.

8. Transmission lock according to Claim 7, **characterized in that,** by the elastic means centring the activation cage (5), the transmission is locked as a function of torque, **in that**, in the case of a torque from the transmission which is higher than a pretensioning torque of the elastic means, the clamping bodies (7) lock the inner ring (4) with the outer ring (2) positively counter to the elastic force via the contour of the inner surface area of the outer ring (2) and the contour of the outer surface area of the inner ring (4).

9. Transmission lock according to one of Claims 1 to 8, **characterized in that** the means used for generating the elastic force is a spring ring (12) which has at least one angling similar to a torsion spring, which angling comes to bear in a groove of the activation cage (5), for the purpose of positioning and avoiding a radial movement of the spring ring (12) in the activation cage (5).

10. Override steering with an override transmission having a first input for driver actuation via a steering handle, a second input for an override actuator and an output to the steering gear of steering, by means of which override transmission an output angle and therefore a wheel angle of the steerable vehicle wheels are set via the two inputs, and with a locking unit, by means of which, in the event of system failure, the second input for the override actuator is locked and the steerability of the vehicle by the driver is maintained, **characterized in that** the locking unit provided is a transmission lock according to one of Claims 1 to 9.

## Revendications

1. Verrouillage de transmission pour une direction à superposition d'un véhicule automobile, pour le verrouillage, par rapport à son mouvement de rotation, d'une partie rotative de la transmission associée à la transmission ou coopérant avec la transmission, dans lequel, au moyen d'un corps de serrage (7) par le biais d'un contour d'une surface d'enveloppe intérieure d'une bague extérieure (2) et d'un contour d'une surface d'enveloppe extérieure d'une bague intérieure (4), la bague intérieure (4) peut être verrouillée à la bague extérieure (2) par engagement par coopération de forme à l'encontre d'une force élastique, et le corps de serrage (7) est maintenu dans une cage d'activation (5) qui peut être verrouillée par le biais d'un disque d'activation commandable (10), **caractérisé en ce que** la cage d'activation (5) est en liaison fonctionnelle avec un disque d'encliquetage d'activation (6) dans le logement duquel une dent d'engagement (10a) associée au disque d'activation (10) vient en prise dans une position de verrouillage et est retirée du logement dans une position déverrouillée.

2. Verrouillage de transmission selon la revendication 1, **caractérisé en ce que** le corps de serrage (7), dans la position verrouillée, est pressé par le biais d'une double rampe (2a) de la bague extérieure (2) à l'encontre d'une force élastique dans une calotte (4a) d'une bague intérieure (4), et le corps de serrage (7), dans la position déverrouillée, est pressé par une force élastique dans un toit de la double rampe (2a) de la bague extérieure (2), et le corps de serrage (7) est espacé des calottes (4a) de la bague intérieure (4) dans la position déverrouillée.

3. Verrouillage de transmission selon la revendication 1 ou 2, **caractérisé en ce que** le disque d'activation (10) ou la dent d'engagement (10a) associée au disque d'activation (10), est monté(e) à rotation essentiellement parallèlement à l'étendue de l'axe longitudinal de la cage d'activation (5).

4. Verrouillage de transmission selon l'une quelconque des revendications 1 à 3, **caractérisé en ce que** le disque d'activation (10) présente au moins un bras pivotant articulé de manière pivotante, lequel bras pivotant présente au moins la dent d'engagement (10a) qui vient en prise au moins en partie dans le logement pour provoquer un verrouillage de la transmission.

5. Verrouillage de transmission selon la revendication 4, **caractérisé en ce que** le logement associé à la partie de transmission rotative est formé par une denture axiale (6a) coopérant avec la partie de transmission rotative.

6. Verrouillage de transmission selon l'une quelconque des revendications 1 à 5, **caractérisé en ce que** le disque d'activation commandable (10) peut être actionné par le biais d'un électroaimant (9) et verrouille la transmission dans l'état non parcouru par du courant de l'électroaimant (9).

7. Verrouillage de transmission selon l'une quelconque des revendications 1 à 6, **caractérisé en ce que** la cage d'activation (5) est centrée par le biais d'un moyen élastique entre la bague intérieure (4) et la bague extérieure (2).

8. Verrouillage de transmission selon la revendication 7, **caractérisé en ce qu'**au moyen du moyen élastique centrant la cage d'activation (5), la transmission est verrouillée en fonction du couple, **en ce que** pour un couple de la transmission, qui est supérieur à un couple de précontrainte du moyen élastique, les corps de serrage (7) verrouillent la bague intérieure (4) à la bague extérieure (2) à l'encontre de la force élastique par engagement par coopération de forme par le biais du contour de la surface d'enveloppe intérieure de la bague extérieure (2) et par le biais du contour de la surface d'enveloppe extérieure de la bague intérieure (4).

9. Verrouillage de transmission selon l'une quelconque des revendications 1 à 8, **caractérisé en ce que** l'on utilise comme moyen pour produire la force élastique une bague élastique (12) qui présente au moins un coude de manière similaire à un ressort rotatif, qui vient en appui dans une rainure de la cage d'activation (5), en vue de réaliser le positionnement et d'éviter un mouvement radial de la bague élastique (12) dans la cage d'activation (5).

10. Direction à superposition comprenant une transmission à superposition avec une première entrée pour un actionnement par le conducteur au moyen d'un levier de direction, une deuxième entrée pour un actionneur à superposition et une sortie pour un mécanisme de direction de la direction, au moyen de laquelle transmission à superposition, par le biais des deux entrées, un angle de sortie et donc un angle de roue des roues dirigeables du véhicule peut être ajusté, et comprenant une unité de verrouillage, au moyen de laquelle, dans le cas d'une panne de système, la deuxième entrée pour l'actionneur à superposition est verrouillée et la capacité de direction du véhicule par le conducteur est conservée, **caractérisée en ce que** l'on prévoit comme unité de verrouillage un verrouillage de la transmission selon l'une quelconque des revendications 1 à 9.
